# EUROPÄISCHE PATENTSCHRIFT

(11) **EP 0 649 519 B1**
(45) Veröffentlichungstag und Bekanntmachung des Hinweises auf die Patenterteilung: **21.01.1998**
(21) Anmeldenummer: 94914959.5
(22) Anmeldetag: 06.05.1994
(51) Int. Cl.: G01L 5/22, G01L 5/00

(54) **EINRICHTUNG ZUR MESSUNG DER WEICHENSTELLKRAFT**
DEVICE FOR MEASURING SWITCHING FORCE
DISPOSITIF PERMETTANT DE MESURER LA FORCE DE MAN UVRE D'AIGUILLAGE

(30) Priorität: 10.05.1993 AT 920/93
(43) Veröffentlichungstag der Anmeldung: 26.04.1995
(73) Patentinhaber: VAE Aktiengesellschaft, 1010 Wien (AT)
(72) Erfinder: DURCHSCHLAG, Gerald, A-8740 Zeltweg (AT)
(74) Vertreter: Haffner, Thomas M., Dr.
(86) Internationale Anmeldenummer: AT9400060
(87) Internationale Veröffentlichungsnummer: WO9427127

(56) Entgegenhaltungen:
- EP-A- 0 344 496
- PATENT ABSTRACTS OF JAPAN vol. 6, no. 108 (P-123) (986) 18. Juni 1982 & JP,A,57 040 623 (JAPANESE NATIONAL RAILWAYS) 6. März 1982

## Beschreibung

Die Erfindung bezieht sich auf eine Einrichtung zur Messung der Weichenstellkraft bei Schienenweichen mit einem Sensor und einem mit dem Sensor verbundenen als Verformungskörper ausgebildeten Meßbolzen, welcher in ein Gelenk im Weichenantrieb einsetzbar ist.

Eine Einrichtung der eingangs genannten Art ist als Weichenstellkraftmesser mit der Bezeichnung "BKM" von der Firma FEHA Feinmechanische Werke bereits auf den Markt gebracht worden. Der bekannte Weichenstellkraftmesser besteht aus einem geschlitzten Stahlkörper als Verformungskörper, der eine Meßuhr als Anzeigeinstrument und eine Befestigungseinrichtung aufnimmt. Der bekannte Weichenstellkraftmesser dient zum Messen der zwischen dem Weichenantrieb und der Weiche auftretenden Kräfte, wobei es gleichgültig ist, ob diese Kräfte vom Weichenantrieb auf die Weichenzungen oder als Restkraft bei Federschienenzungen oder als Auffahrkraft gegen die Festhaltekraft oder gegen den Auffahrwiderstand des Weichenantriebes wirken. Der Meßbolzen wird zu diesem Zwecke anstelle eines Weichenverbindungsbolzens in ein Kreuzgelenk bzw. in ein zweiachsiges Gelenk eingesetzt, wobei durch die Schlitzung des Stahlkörpers Biegebalken ausgebildet werden. Bei der bekannten Einrichtung sind an der Außenseite wulstartige Verdickungen vorgesehen, welche jeweils dem Angriff der Kräfte dienen. An den nach oben verlängerten Biegebalken ist als Meß- bzw. Anzeigeinstrument eine Meßuhr vorgesehen. Zur korrekten Orientierung des Meßbolzens in dem jeweiligen Gelenk ist eine Festhaltevorrichtung vorgesehen, welche in den Schlitz des Meßbolzens eintaucht und eine axiale Verschiebung des Meßbolzens verhindern soll. Insgesamt ergibt sich eine mechanische Meßvorrichtung, welche bei entsprechend hoher Genauigkeit ein hohes Maß an mechanischer Empfindlichkeit aufweisen muß und daher bei Transport- und Montage besonders geschützt werden muß. Die Gefahr einer Beschädigung derartiger mechanischer Stellkraftmesser ist naturgemäß relativ hoch, wobei durch die gewählte Festhaltevorrichtung, welche in den Schlitz des Meßbolzens eintaucht, eine Verzerrung der auf die Biegebalken ausgeübten Kräfte entstehen kann.

Abgesehen von derartigen mechanischen Meßeinrichtungen sind eine Reihe elektromechanischer Kraftmesser für Bolzen in Gelenken bereits bekanntgeworden. So ist beispielsweise der DE-A1 35 15 126 ein elektromechanischer Kraftmesser zu entnehmen, bei welchem in einen Hohlraum eines rohrförmigen Bolzens an einem Bolzenende ein starrer Meßstab und am anderen Bolzenende ein Sensor eingesetzt sind. Derartige Anordnungen sind naturgemäß erschütterungsempfindlich und bergen bei der Montage und Demontage des rohrförmigen Bolzens die Gefahr, daß alle Justierungen und Kalibrierungen verloren gehen, womit reproduzierbare Messungen im rauhen Bahn-Betrieb nicht ohne weiteres möglich sind. Analoges gilt für den aus der DE-A1 34 34 843 bekanntgewordenen Kraftmesser, bei welchem gleichfalls im Inneren eines Hohlraumes eines Bolzens ein scheibenförmiger Träger ortsfest angeordnet ist, welcher Dehnmeßstreifen aufweist. Bei der Montage und Demontage eines derartigen rohrförmigen Bolzens besteht die Gefahr, daß die Zuleitungen und Ableitungen zu den Dehnmeßstreifen überbeansprucht werden. Ein einfaches Einsetzen und Ziehen derartiger Bolzen ohne aufwendige Hilfswerkzeuge ist nicht ohne weiteres möglich.

Bei dem aus der DE-A1 35 15 125 bekanntgewordenen Kraftmesser zur Messung von Kräften in einem etwa bolzenartigen Bauelement ist wiederum ein rohrförmiger Bolzen vorgesehen, in welchen ein Meßstab eintaucht, dessen freies Ende in eine Spule eintaucht. Eine derartige Ausbildung ist auf Grund der großen Länge des Meßstabes relativ empfindlich. Beim Überfahren von Weichen entstehen aber Erschütterungen, welche mit einer derartigen Anordnung zwar Signale zur Folge haben, welche jedoch nicht ohne weiteres als gemessene Kraft auswertbar sind. Auch hier ist eine einfache und auch bei Erschütterungen zuverlässige Messung nicht ohne weiteres möglich. Ein analog aufgebauter Kraftmesser ist auch der DE-A1 34 34 131 zu entnehmen.

Die Erfindung zielt nun darauf ab, eine Einrichtung der eingangs genannten Art zu schaffen, welche auch im rauhen Bahn-Betrieb und insbesondere bei gleichzeitig auftretenden Erschütterungen eindeutige Signale, aus welchem eine zu messende Kraft bestimmt werden kann, ergibt und welche eine einfache Montage und Demontage vor Ort ermöglicht, ohne daß hiebei die Gefahr der Beschädigung oder die Dejustierung der Einrichtung besteht. Zur Lösung dieser Aufgabe besteht die Erfindung im wesentlichen darin, daß der Sensor als elektromechanischer Sensor ausgebildet ist und außerhalb des Kraftangriffes auf den Meßbolzen in einem mit dem Meßbolzen verbundenen Kopf angeordnet ist. Dadurch, daß nun innerhalb des Meßbolzens keine Teile des Meßsensors angeordnet sind, welche auf Grund der Länge des Meßbolzens Schwingungen ausgesetzt werden, sondern elektro-mechanische Sensoren außerhalb des Kraftangriffes im Kopf des Meßbolzens angeordnet ist, wird eine Ausbildung geschaffen, welche einen entsprechend breiten Kopf aufweisen kann, welcher das Einsetzen und Entnehmen des Bolzens aus der jeweiligen Meßposition erleichtert. In den Kopf eines derartigen Meßbolzens kann ein entsprechend mechanisch geschützter Meßsensor, wie er beispielsweise der US-PS 4 530 245 entnommen werden kann, in einfacher Weise eingebaut werden. Beim Eintreiben bzw. ziehen des Meßbolzens können übermäßige Kräfte, welche zu einer Dejustierung eines Meßsensors bei konventionellen Einrichtungen führen würde, mit Sicherheit vermieden werden. Die Integration der gesamten, für die Messung notwendigen Bauteile in einen mit dem Meßbolzen verbundenen Kopf ermöglicht die Krafteinleitung ähnlich wie bei dem eingangs genannten mechanischen Weichenstellkraftmesser an eine Stelle außerhalb der Biegebalken in den Kopf, wobei der mit dem Meßbolzen verbundene Kopf entsprechend stabil ausgebildet sein kann. Um auch bei dickwandigen Ausbildungen des Bolzenkopfes und bei entsprechenden stabilen Edelstahlausbildungen des Meßbolzens und des Kopfes eine entsprechend gute Verformbarkeit und damit ein entsprechend großes Signal sicherzustellen, ist mit Vorteil die Ausbildung so getroffen, daß der Kopf für die Aufnahme des Meßsensors quer zur Achse des Bolzens geschlitzt ausgebildet ist.

Für die Erleichterung des Einbaus und des Ausbaus in Teile des Weichenstellantriebs ist mit Vorteil die Ausbildung so getroffen, daß der Kopf für die Aufnahme des Meßsensors eine Anschlagschulter für ein Zwischenstück bildet, wobei das Zwischenstück Angriffstellen für ein Werkzeug zum Ziehen des Meßbolzens aufweist und einen Teil des Gelenkes, in welches der Meßbolzen eingesetzt wird, umgreift. Nach dem Ziehen eines entsprechenden Verbindungsbolzens aus dem Kreuzgelenk eines Weichenantriebs kann der Meßbolzen in eine entsprechende Lage eingeschoben werden, wobei für die korrekte Messung eine Lagefixierung des Meßbolzens, insbesondere eine Drehlagenfixierung des Meßbolzens besonders vorteilhaft ist, um neuerliche Kalibrierungen bei jeder Messung zu vermeiden. zur richtigen Lagefixierung des Meßbolzens ist die Ausbildung so getroffen, daß die Anschlagschulter des Kopfes einen von der Kreisform abweichenden achssymmetrischen Umriß aufweist, welcher mit einer Ausnehmung oder Vorsprüngen des Zwischenstückes zur Drehlagensicherung zusammenwirkt, wobei auf diese Weise der Meßbolzen entsprechend gegen Verdrehung gesichert werden kann. Das Zwischenstück wird auf das Gabelstück vor der Montage des Bolzens aufgeschoben, wobei das Zwischenstück an die geometrischen Gegebenheiten des Gabelstückes eines Gelenkes angepaßt sein kann. Durch die seitlichen Wangen des Verdrehschutzes am Zwischenstück sitzt der Meßbolzen in der Folge lagefixiert in den Gelenken, so daß die Krafteinleitung immer in exakt definierter Richtung auf den Meßbolzen erfolgt, was insbesondere dann von Vorteil ist, wenn die Ausbildung so getroffen ist, daß der Meßbolzen in axialer Richtung geschlitzt ausgebildet ist, und daß sich der axiale Schlitz bis zum ersten quer zur Achse des Bolzens verlaufenden Schlitz des Kopfes erstreckt. Ein derartig geschlitzter Meßbolzen erlaubt eine höhere Verformung und für eine exakte, reproduzierbare Messung soll die Krafteinleitung immer quer zu den im Meßbolzen vorgesehenen Längsschlitzen erfolgen.

In besonders vorteilhafter weise kann auch bei massiver und damit stoß- und sturzgesicherter Ausbildung des Meßbolzens mit dem Meßkopf die Ausbildung so getroffen werden, daß der Kopf zwei in axialer Richtung versetzte Schlitze aufweist, wodurch trotz der stabilen und stoßunempfindlichen Ausbildung eine entsprechend empfindliche Messung sichergestellt ist.

Das Zwischenstück dient, wie bereits erwähnt, dem Angriff eines Werkzeuges zum Ziehen des Meßbolzens, und dadurch, daß dieses Zwischenstück den Teil des Gelenkes, in welchen der Meßbolzen eingesetzt wird, umgreift, wird eine definierte Lage des zwischenstückes und damit eine definierte Drehlage des Meßbolzens sichergestellt.

Eine derartig stoßsichere und einfache Ausbildung des Meßbolzens kann mit Vorteil auch im rauhen Bahnbetrieb unmittelbar durch Anschluß an einen PC- bzw. Laptop zu einer komplexen Auswerteeinrichtung zusammengeschaltet werden, wobei mit Vorteil die Ausbildung so getroffen ist, daß der Sensor über einen Signalverstarker und einen Analog/Digitalwandler mit einer Standardschnittstelle, insbesondere einer seriellen Schnittstelle mit einem Rechner mit einem Speicher und einer Anzeige, verbunden ist.

Insgesamt ergibt sich eine leichte und exakte Festlegung des Meßbolzens bei entsprechend leichter Lösbarkeit des Meßbolzens und hoher Meßgenauigkeit, wobei ein Bauteil eingesetzt wird, welches ein hohes Maß an Stoßfestigkeit und an Verschleißfestigkeit aufweist.

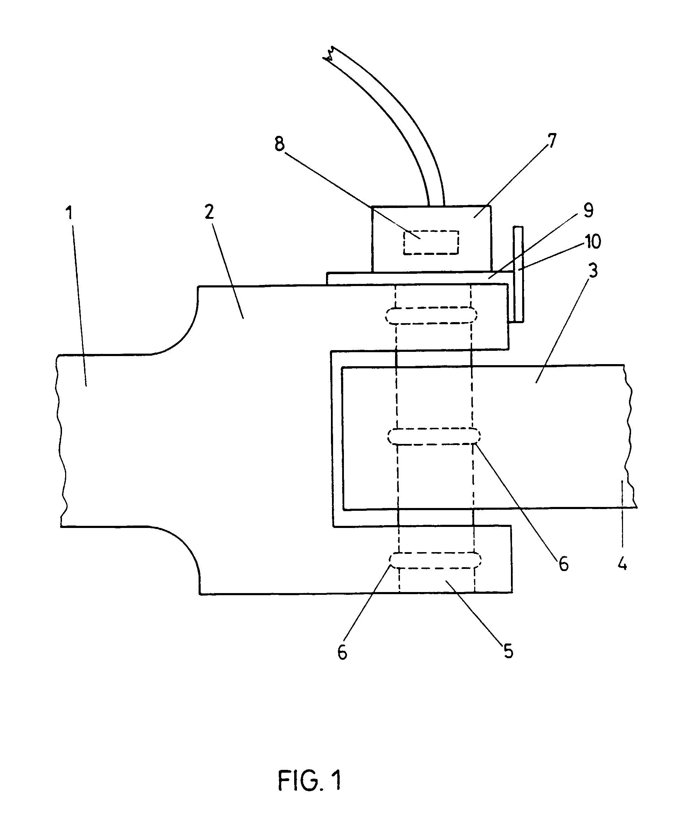

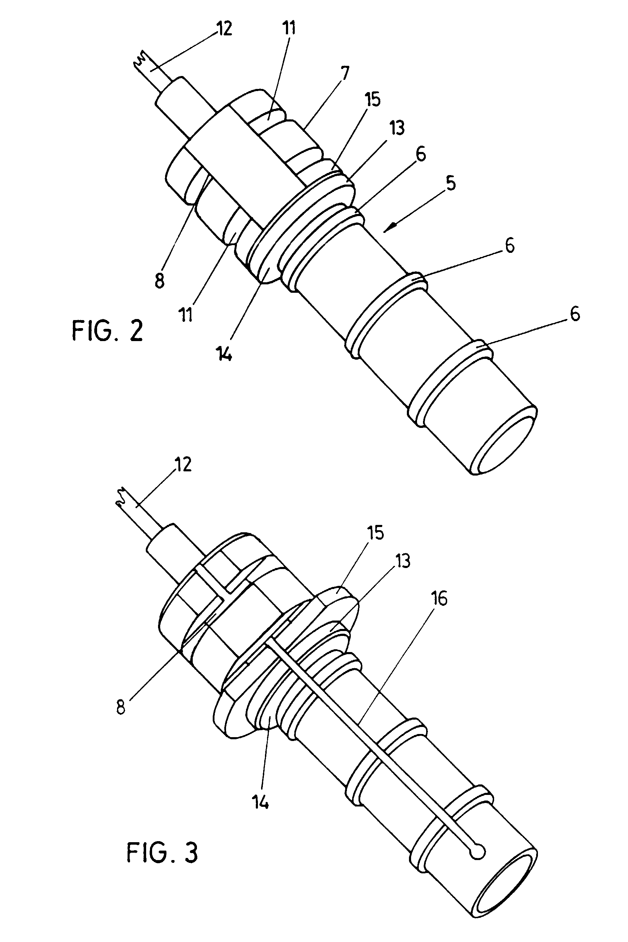

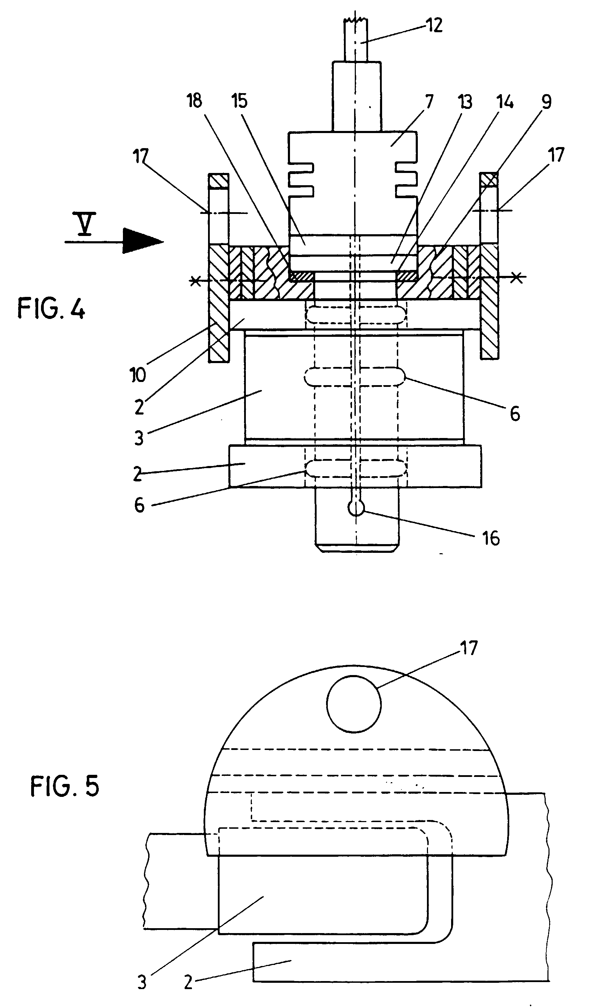

Die Erfindung wird nachfolgend an Hand eines in der zeichnung schematisch dargestellten Ausführungsbeispieles näher erläutert. In dieser zeigen: Fig.1 eine schematische Teilansicht durch ein Gelenk mit eingesetztem Meßbolzen; Fig.2 eine perspektivische Seitenansicht des erfindungsgemaßen Meßbolzens; Fig.3 eine weitere perspektivische Ansicht des erfindungsgemaßen Meßbolzens; Fig.4 eine schematische Darstellung des unter Verwendung eines zwischenstückes in das Gelenk eingesetzten Meßbolzens, und Fig.5 eine Ansicht in Richtung des Pfeiles V der Fig.4.

In Fig.1 ist das Ende einer Verbindungsstange 1 mit einem Gabelstück 2 ersichtlich, in welches ein Lagerauge einer Kupplungsstange 4 eintaucht. Die Verbindung zwischen dem Lagerauge 3 und dem Gabelstück 2 erfolgt mittels eines Meßbolzens 5, welcher an seinem Umfang schematisch angedeutete rippenförmige Erhebungen 6 aufweist, welche jeweils kraft-schlüssig in den entsprechenden Ausnehmungen des Gabelstückes 2 bzw. des Lagerauges 3 angreifen. Am freien Ende des Bolzens 5 ist ein Kopf 7 angeordnet, in welchem ein elektromechanischer Sensor 8 angeordnet ist. Der Kopf 7 weist an seinem der Außenseite der Gabel 2 zugewandten Ende eine Anschlagschulter für einen plattenförmigen Steg 9 eines Zwischenstückes 10 auf und ist am Zwischenstück 10 entsprechend drehlagensicher gehalten. Das Zwischenstück 10 umgreift hiebei mit quer zum plattenförmigen Steg 9 verlaufenden Teilen die Klaue bzw. das Gabelstück 2.

In Fig.2 ist der Meßbolzen 5 im Detail nochmals ersichtlich. An der Außenseite des in das Lagerauge eintauchenden und das Gabelstück 2 durchsetzenden Meßbolzen sind wieder ringförmige Erhebungen 6 vorgesehen, welche der Krafteinleitung dienen. Der verbreiterte Kopf 7 ist mit Schlitzen 11 ausgebildet und enthält in seinem Hohlraum den elektromechanischen Meßsensor 8. Die elektrische Zuleitung ist entsprechend zuggesichert mit 12 angedeutet.

Aus der Darstellung in Fig.3 ist ersichtlich, daß das dem Meßbolzen 5 zugewandte untere, plattenförmige Element 13, welches die Anschlagschulter 14 für den Steg 9 des Zwischenstückes aufweist, in Richtung zum Kopf von einem Ringflansch 15 mit von der Kreisform abweichendem Umriß, wie sie sich aus dem Vergleich von Fig.2 und Fig.3 ergibt, übergriffen wird. Diese von der Kreisform abweichende Umriß des Ringflansches dient der Drehlagensicherung in dem in Fig.1 schematisch angedeuteten zwischenstück 10.

Der Meßbolzen selbst weist einen in axialer Richtung verlaufenden Schlitz 16 auf, welcher zur Ausbildung von Biegebalken führt, deren Verformung auf den im Kopf angeordneten elektromechanische Meßsensor weitergeleitet wird.

In Fig.4 ist der Zusammenbau der Meßeinrichtung schematisch näher erläutert. Mit 10 ist wiederum das zwischenstück bezeichnet, welches das Gabelstück 2 übergreift. Das Zwischenstück weist Angriffstellen 17 für den Angriff eines Werkzeuges zum Ziehen des Meßbolzens auf. Nach dem Festlegen des Zwischenstückes 10 am Gabelstück 2 und dem Positionieren des Lagerauges 3 wird der Meßbolzen 5 in die gewünschte Position gebracht, wobei mit 16 wiederum der Schlitz des Meßbolzens 5 bezeichnet ist. Die Drehlage wird dadurch gesichert, daß die Abflachung des Flansches 15 in die Ausnehmung des plattenförmigen Steges 9 eintaucht. zwischen der Anschlagschulter 14 und der entsprechenden Auflage am plattenförmigen Steg 9 sind elastische Zwischenlagen 18 vorgesehen, wodurch Längskräfte auf den Meßbolzen vermieden werden und exaktere Meßwerte erhalten werden. Die exakte Positionierung der Höhenlage des Meßbolzens erfolgt gegebenenfalls unter Zwischenschaltung von Beilagscheiben oder Zwischenelementen zwischen dem Meßkopf 7 und dem plattenförmigen Steg 9 des Zwischenstückes oder unter Verwendung von Einlagen zwischen dem zwischenstück und dem Gabelstück. Die Lagefixierung des plattenförmigen Steges 9 relativ zum Gabelstück 2 wird durch seitliche Distanzstücke 19 und Schrauben 20, welche den plattenförmigen Steg 9 mit den Querwanden des Zwischenstückes 10 verbinden, gewährleistet.

Bei der Darstellung nach Fig.5 sind die Ausnehmungen 17 für den Angriff eines Werkzeuges zum Ziehen des Meßbolzens deutlich ersichtlich. Dadurch, daß zum Ziehen des Meßbolzens das Zwischenstück 10 Verwendung findet, können übermäßige Kräfte vom Kopf bzw. vom Meßbolzen ferngehalten werden.

## Patentansprüche

1. Einrichtung zur Messung der Weichenstellkraft bei Schienenweichen mit einem Sensor und einem mit dem Sensor verbundenen als Verformungskörper ausgebildeten Meßbolzen (5), welcher in ein Gelenk im Weichenantrieb einsetzbar ist, dadurch gekennzeichnet, daß der Sensor (8) als elektromechanischer Sensor ausgebildet ist und außerhalb des Kraftangriffes auf den Meßbolzen (5) in einem mit dem Meßbolzen verbundenen Kopf (7) angeordnet ist.

2. Einrichtung nach Anspruch 1, dadurch gekennzeichnet, daß der Kopf (7) für die Aufnahme des Meßsensors (8) quer zur Achse des Bolzens (5) geschlitzt ausgebildet ist.

3. Einrichtung nach Anspruch 1 und 2, dadurch gekennzeichnet, daß der Kopf (7) für die Aufnahme des Meßsensors (8) eine Anschlagschulter (14) für ein Zwischenstück (10) bildet, wobei das zwischenstück (10) Angriffstellen (17) für ein Werkzeug zum ziehen des Meßbolzens (5) aufweist und einen Teil des Gelenkes, in welches der Meßbolzen (5) eingesetzt wird, umgreift.

4. Einrichtung nach Anspruch 2 oder 3, dadurch gekennzeichnet, daß der Meßbolzen (5) in axialer Richtung geschlitzt ausgebildet ist, und daß sich der axiale Schlitz (16) bis zum ersten quer zur Achse des Bolzens (5) verlaufenden Schlitz (11) des Kopfes (7) erstreckt.

5. Einrichtung nach einem der Ansprüche 1 bis 4, dadurch gekennzeichnet, daß der Kopf (7) zwei in axialer Richtung versetzte Schlitze (11) aufweist.

6. Einrichtung nach Anspruch 3, dadurch gekennzeichnet, daß die Anschlagschulter (14) des Kopfes (7) einen von der Kreisform abweichenden achssymmetrischen Umriß aufweist, welcher mit einer Ausnehmung oder Vorsprüngen des Zwischenstückes (10) zur Drehlagensicherung zusammenwirkt.

7. Einrichtung nach einem der Ansprüche 1 bis 6, dadurch gekennzeichnet, daß der Sensor (8) über einen Signalverstarker und einen Analog/Digitalwandler mit einer Standardschnittstelle, insbesondere einer seriellen Schnittstelle mit einem Rechner mit einem Speicher und einer Anzeige, verbunden ist.

## Claims

1. An arrangement for measuring the switch setting force at rail switches, comprising a sensor and a measuring pin (5) connected with the sensor and designed as a deformation body, which measuring pin is insertable into a joint provided in the switch drive, characterized in that the sensor (8) is designed as an electromechanical sensor and is arranged beyond the point of impact on the measuring pin (5) within a head (7) connected with the measuring pin.

2. An arrangement according to claim 1, characterized in that the head (7) is designed to be slitted transverse to the axis of the pin (5) for receiving the measuring sensor (8).

3. An arrangement according to claims 1 and 2, characterized in that the head (7) forms a stop shoulder (14) for an intermediate piece (10) destined to receive the measuring sensor (8), the intermediate piece (10) having working sites (17) for a tool for extracting the measuring pin (5) and embracing a portion of the joint in which the measuring pin (5) is inserted.

4. An arrangement according to claim 1, 2 or 3, characterized in that the measuring pin (5) is designed to be slitted in the axial direction and that the axial slit (16) extends as far as to the first slit (11) of the head (7) extending transverse to the axis of the pin (5).

5. An arrangement according to any one of claims 1 to 4, characterized in that the head (7) comprises two slits (11) offset in the axial direction.

6. An arrangement according to any one of claims 1 to 5, characterized in that the stop shoulder (14) of the head (7) has a contour that deviates from the circular shape in respect of axial symmetry and cooperates with a recess or with projections of the intermediate piece (10) with a view to securing the rotary position.

7. An arrangement according to any one of claims 1 to 6, characterized in that the sensor (8) is connected with a standard interface via a signal amplifier and an analog/digital converter, in particular, with a serial interface comprising a computer having a storage and a display.

## Revendications

1. Dispositif pour la mesure de la force de manoeuvre de l'aiguille dans des aiguillages de chemin de fer, comprenant un capteur et une broche de mesure (5) constituée par un corps déformable et reliée au capteur, broche qui peut être incorporée dans une articulation prévue dans l'entraînement de l'aiguille, caractérisé en ce que le capteur (8) est constitué par un capteur électromécanique et est disposé à l'extérieur de l'application de la force sur la broche de mesure (5), dans une tête (7) reliée à la broche de mesure.

2. Dispositif selon la revendication 1, caractérisé en ce que la tête (7) est fendue transversalement à l'axe de la broche (5) pour recevoir le capteur de mesure (8).

3. Dispositif selon la revendication 1 ou 2, caractérisé en ce que la tête (7) destinée à recevoir le capteur de mesure (8) forme un épaulement de butée (14) pour une pièce intermédiaire (10), la pièce intermédiaire (10) présentant des zones d'attaque (17) pour un outil d'extraction de la broche de mesure (5) et entourant une partie de l'articulation dans laquelle la broche de mesure (5) est utilisée.

4. Dispositif selon la revendication 1, 2 ou 3, caractérisé en ce que la broche de mesure (5) est fendue dans la direction axiale et en ce que la fente axiale (16) se prolonge jusqu'à la première fente (11) de la tête (7) qui s'étend transversalement à l'axe de la broche (5).

5. Dispositif selon une des revendications 1 à 4, caractérisé en ce que la tête (7) présente deux fentes (11) décalées dans la direction axiale.

6. Dispositif selon une des revendications 1 à 5, caractérisé en ce que l'épaulement de butée (14) de la tête (7) présente un contour symétrique par rapport à l'axe, différent de la forme circulaire, qui coopère avec un évidement ou avec des protubérances de la pièce intermédiaire (10) pour la liaison de la position angulaire.

7. Dispositif selon une des revendications 1 à 6, caractérisé en ce que le capteur (8) est relié, par l'intermédiaire d'un amplificateur de signaux et d'un convertisseur analogique/numérique, à une interface standard, en particulier une interface série comprenant un ordinateur muni d'une mémoire et d'un affichage.
